# EUROPEAN PATENT SPECIFICATION

(11) **EP 1 558 008 B1**
(45) Date of publication and mention of the grant of the patent: **07.03.2007**
(21) Application number: 04001567.9
(22) Date of filing: 26.01.2004
(51) Int. Cl.: H04M 1/03

(54) **Portable communication device equipped with two flat panel speakers**
Mobiles Kommunikationsendgerät mit zwei Flachlautsprechern
Dispositif de communication électronique mobile avec deux haut-parleurs plats

(43) Date of publication of application: 27.07.2005
(73) Proprietor: Sony Ericsson Mobile Communications AB, 221 88 Lund (SE)
(72) Inventor: Zhinong, Ying, 226 49 Lund (SE); Shi, Wanqing, 245 63 Hjärup (SE)
(74) Representative: Dahnér, Christer

(56) References cited:
- WO-A-02/50944
- WO-A-03/003505
- US-A1- 2002 107 044
- US-A1- 2003 068 056
- US-A1- 2003 216 157
- ANONYMOUS: "Audio speaker and touch screen with display" RESEARCH DISCLOSURE, KENNETH MASON PUBLICATIONS, HAMPSHIRE, GB, vol. 456, no. 68, April 2002 (2002-04), XP007130185 ISSN: 0374-4353

## Description

### TECHNICAL FIELD OF THE INVENTION

The present invention relates to the field of speakers and more particularly to a portable communication device using two flat panel speakers combined with communication units, where at least one communication unit is an antenna.

### DESCRIPTION OF RELATED ART

There is a trend within the field of portable communication devices to make these devices as small as possible. In order to do this there are continuous efforts made by the manufacturers of such devices to use the space as efficiently as possible. The development in electronics has made it possible to miniaturise the components of the terminals, at the same time making the terminals capable of performing more advanced functions and services. The development of new transmission schemes, the so-called 3rd generation mobile system standing at the door and the 4th generation to be expected maybe ten years later, also provides the possibility to convey more advanced data to the wireless communication terminals, such as real time video.

In order to benefit from the capabilities of the transmission system, the future generation of phones will have a large display in order to perform multimedia input and output, and the picture quality will be of high importance. Still, the keypad or keyboard must be large enough to allow people to press one key at the time. With the development of the communication systems and the capabilities of multimedia functions, the demands on the sound quality from the terminals will also increase. In the next generation of terminals using WCDMA technique, it will be possible to use a wider audio frequency band. The speaker of the terminal may also be used as a ringer instead of a traditional buzzer, for a single tone or polyphonic ring signals and as a hand free speaker built-in into the phone. Normally, these functions are performed by a second speaker mounted in the back of the phone, but combined speakers for two or all three of these functions exist.

In a conventional state of the art communication terminal a terminal audio output is mounted on the front of the terminal above the display with the speaker immediately behind the output. This means that even with a smallest available speaker used today, with a diameter of about 13 mm, the terminal would be approximately this much longer in its longitudinal extension than what would have been the case if only the display and/or keypad had defined the length of the terminal. The antenna of the terminals is generally located at the upper portion of the backside of the terminal, the lower backside being occupied by a battery. Placing the speaker behind the display would therefore increase the thickness of the terminal since it would have to compete with the antenna for the relevant space.

As mentioned above, almost every phone today has the speaker position in the upper parts of the front of the terminal above the display and keyboard. This means that the height of the speaker, display and the keyboard determines the length of the phone. Since the speaker performance is highly dependent on the dimension, reduction of the speaker size results in less good acoustics. There is also a general desire to have larger displays in the communication terminals, not just wider but also longer, and with the common layout of the keyboard which people are used to, the height of the terminal can basically not be reduced more than today without resulting drawbacks to the display or keypad.

There is also a trend within the field of portable communicating devices, and especially within the field of cellular phones to have the antenna in-built in the phone itself in order to reduce the size of the phone.

In US 2002/0137478, assigned to NEC Viewtechnology, a design is proposed in which the speaker and also the microphone are moved to the backside of a terminal. The publication mainly relates to a so-called clamshell design, but is equally applicable to a standard stick-type terminal. The speaker and the microphone are devices as identical flat panel type speakers. When using the terminal for voice connection one of the flat panel speakers is used as a microphone. In a first embodiment the phone is a clam-shell phone, where both the speakers are provided on the back of the two hingedly connected sections, on the opposite side of the display of the phone. In a second embodiment a standard stick-type terminal is shown where the two speakers are provided on the same side of terminal and on the side where the display is provided, and the display and keypad are provided between the two flat panel speakers. This device manages some size reduction because of the dual use of the microphone as an antenna, but since the microphone is small good stereo performance is hard to obtain. The actual space saved is because of this also limited.

US 2003/068056 describes a mobile phone having a display window acting as a speaker together with sound transducers also acting as speakers, where the display window speaker may be a flat panel speaker. The display is operated at 1 kHz and above, while the transducers use the lower frequency range.

WO 03/003505 describes a mobile phone having a flat panel speaker combined with an antenna or provided in the shell of the phone. WO 02/50944 also describes combining a speaker with an antenna in a communication terminal.

There is therefore a need for providing a dual speaker solution for a portable communication device, where the size of the device can be even further diminished while at the same time allowing good stereo sound.

### SUMMARY OF THE INVENTION

The present invention is directed towards solving the problem of providing a portable communication device, where the available space inside the device is used in a more efficient manner while at the same time allowing stereo sound reproduction.

One object of the present invention is thus to provide a portable communication device, where the available space inside the device is used in a more efficient manner while at the same time allowing stereo sound reproduction.

According to a first aspect of the present invention, this object is achieved by a portable communication device comprising:
at least one first communicating unit in the form of a first antenna element provided on a first flat sheet, which first flat sheet is arranged to work as a loudspeaker generating sounds, and
at least one second communicating unit in the form of a display provided on or in a second flat sheet, which second flat sheet is also arranged to work as a loudspeaker
wherein a sound aperture is provided adjacent said first antenna element and the communicating units and corresponding flat sheets are provided on opposite sides of the portable communication device.

A second aspect of the present invention is directed towards a portable communication device including the features of the first aspect, comprising only one body.

A third aspect of the present invention is directed towards a portable communication device including the features of the first aspect, wherein each sheet is provided with an exciter arranged to induce vibrations in the respective sheet.

A fourth aspect of the present invention is directed towards a portable communication device including the features of the first aspect, wherein each sheet is made from an insulating material.

A fifth aspect of the present invention is directed towards a portable communication device including the features of the eighth aspect, wherein at least one sheet is made from a plastic material.

A sixth aspect of the present invention is directed towards a portable communication device including the features of the eighth aspect, wherein at least one sheet is made from a ceramic material.

The invention has the following advantages. It enables the provision of good stereo sound while at the same time allowing efficient use of the space in the device.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a view of the front side of a stick-type phone according to the present invention,
fig. 2 schematically shows a view of the back side of the phone in fig. 2 under the cover of the phone,
fig. 3 shows a side view of the interior of the phone in fig. 1 and 2, and
fig. 4 shows a front view of the front side of the phone under the cover of the phone.

### DETAILED DESCRIPTION OF EMBODIMENTS

A portable communication device according to the invention will now be described in relation to a cellular phone, which is a preferred variation of the invention. The phone is furthermore preferably a so-called stick type phone, i.e. a phone having only one body or casing containing all the components of the phone. The portable communication device can be another type of device though, like a cordless phone, a communication module, a PDA or any other type of portable device communicating with radio waves. There will most likely be a number of varying portable communication devices in the future when the 3^{rd} generation cellular systems are implemented, which require good broadband performance.

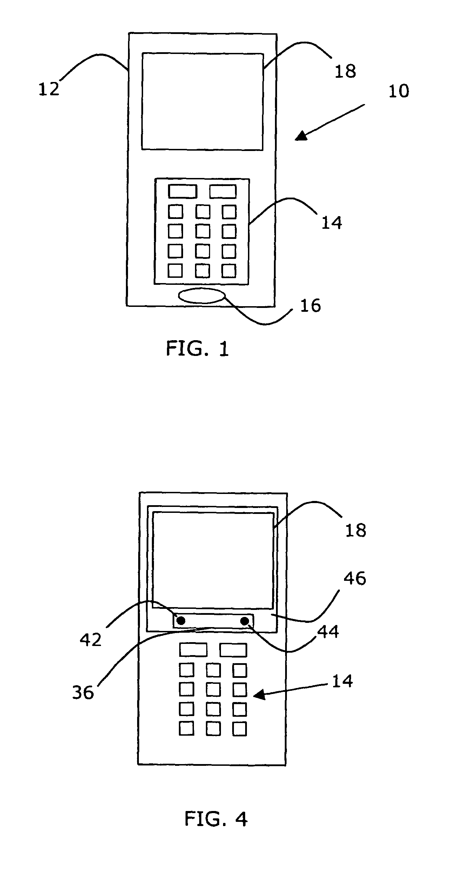

Fig. 1 schematically shows a view of the front side of a phone according to the invention. The phone 10 includes a front side cover 12 on which is provided a display 18 a keypad 14 and a microphone 16. The phone also includes an antenna and a front speaker, (not shown). These details will be described in more detail later on in this description. The keypad 14 is arranged for allowing a user of the phone to input information like phone numbers or select various functions. The display 18 is arranged for displaying various type of information to the user of the phone and the microphone 16 is arranged for receiving sound for instance when a user of the phone is engaged in a telephone conversation. The antenna is here a first communicating unit and the display is a second communicating unit.

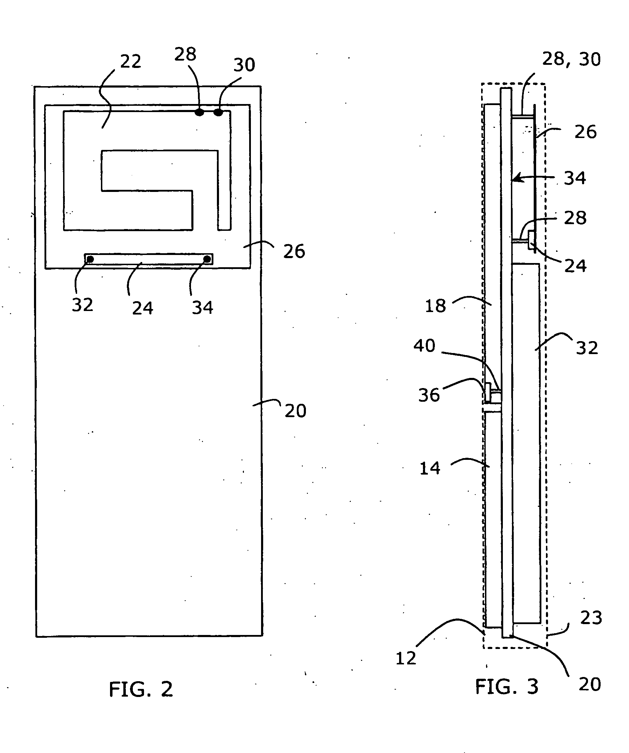

Fig. 2 illustrates schematically a backside of a circuit board 20 of the phone in fig. 1, with attached components. Fig. 3 illustrates a cross-sectional side view of the phone, showing the circuit board 20, a battery 32, the display 18, the keypad 14, and a terminal cover indicated by the dashed lines. The cover has a front 12 and a back 23 side. At an upper end of the circuit board 20, an antenna element 22 is disposed. The antenna element 22 is provided through a first flat sheet or film 26 carrying a metal trace 22, which metal trace constitutes a patch antenna 22. The antenna element 22 is arranged parallel to and at a pre-selected distance from a ground plane 34 disposed as a layer on or inside the circuit board 20. The ground plane preferably extends the entire length of the circuit board 20, but may optionally only cover a portion of the circuit board 20. The spacing between the antenna element 22 and the ground plane 34 serves an electromagnetic cavity. Dependent on the particular embodiment of the antenna patch, the distance between the antenna element 22 and the ground plane 34 may be critical for good Voltage Standing Wave Ratio VSWR and gain, and normal distances between these two planes is 5 - 10 mm. The antenna needs both feeding and grounding. Fig. 2 is merely an example, and in this embodiment feeding for the antenna is provided at 28, whereas ground is connected at 30.

The first sheet 26 for the antenna element is made from an insulating material, which is microwave low loss, such as plastic. The material is preferably some form of polymer, e.g. a polyimide such as Kapton®. In an alternative embodiment, the sheet of the antenna element is made from a ceramic.

The definite design of the antenna trace is not critical for the invention, and the trace may include one or more parasitic elements apart from the antenna patch 22. The antenna may be tuned to handle reception, and preferably transmission, from 800 MHz up to 6000 MHz. Antenna patches with plural arms, such as the one illustrated, can be selected for multiple band performance. The antenna trace is conductive, preferably metallic, e.g. made from copper. The antenna trace is in one embodiment printed on the antenna element sheet 26, and in an alternative embodiment etched out of a conductive layer on the antenna element sheet 26. The antenna trace 22 may be disposed on the side of the sheet 26 facing the ground sheet plane 34 or on an intermediate layer.

An exciter or actuator 24 is disposed in direct mechanical contact with said sheet 26. Preferably, the exciter 24 is disposed adjacent to a side edge of said antenna element 22, on the side facing the ground plane 34. The exciter 24 has first and second connection pads 32 and 34 for connecting to electric leads 28, which leads 28 connect electrical sound signals to the exciter 24. Exciter 24 is devised to act as a vibrator, inducing vibrations into the sheet 26 carrying the antenna trace 22, such that sound waves are generated by the vibrating sheet 26. Consequently, sheet 26 acts both as an antenna carrier and as a speaker. In a preferred embodiment, exciter 24 comprises a piezoelectric crystal, which expands and contracts dependent on said electrical signals, for generating said vibrations. A drive circuit (not shown) for the exciter 24 is preferably mounted on the circuit board 20, connected to said leads 28. This type of combined antenna and speaker is described in more detail in EP03013926.5. It should also be realised that a sound aperture can be provided in close proximity to the antenna 22 such that sound provided by the cavity defined by the first sheet and the ground plane can be enhanced. The above described EP-application mentions various such apertures.

Also the display 18 is provided on a similar second sheet, which also can be varied in the same way as the first sheet, and therefore an actuator 36 is also placed on the second sheet of the display 18 and connected with leads 40 to a similar driving circuit (not shown) for receiving electrical sound signals.

Fig. 4 shows a front view of the different elements inside the casing on the front side of the phone. The actuator 36 is here provided on a sheet 46 of the same above-mentioned material, which sheet also includes the display 18. The actuator is here provided just below the display window or the hole of the front cover where the display 18 is provided, which is apparent from a comparison of fig. 1 and 4. The actuator 36 includes, in the same way as the previously described actuator 24, first and second connection pads 42 and 44 for connecting to the previously described leads. Below the actuator 26, the keys of the keypad 14 are arranged. This actuator also drives the sheet of the display in the same way as the sheet of the antenna.

With this arrangement a number of advantages are provided. Since the two speakers are provided on opposite sides of the phone, they can provide good stereo quality, when for instance music is to be played. When the phone is to be used for a phone conversation the speaker that is combined with the antenna is disconnected and only the front speaker that is combined with the display is used. When a phone call is to be alerted by using a ring signal one or both speakers can be used and preferably only the back speaker that is combined with the antenna. If a hands free conversation is wanted both speakers can also be used. By this combination a stereo speaker system can be obtained without having to use additional space, since the speakers are combined with other functional units of the phone, which means that a size decrease can be obtained or that a larger display can be provided. By having a large display a large speaker is also obtained so that stereo sound is further enhanced. In this way the internal space of the phone is used in a more efficient manner.

There are a number of variations that can be made to the present invention apart from the ones already mentioned. Other types of phones can be used, like for instance a clamshell phone. The antenna used in the first sheet need furthermore not be a multiband antenna or can be another type of multiband antenna than the one shown. Therefore the invention is only to be limited by the following claims.

## Claims

1. Portable communication device (10) comprising:
at least one first communicating unit (22) in the form of a first antenna element provided on a first flat sheet (26), which first flat sheet is arranged to work as a loudspeaker generating sounds, and
at least one second communicating unit (18) in the form of a display and provided on or in a second flat sheet (46), which second flat sheet is also arranged to work as a loudspeaker,
wherein a sound aperture is provided adjacent said first antenna element and the communicating units (18, 22) and corresponding flat sheets (46, 26) are provided on opposite sides of the portable communication device.

2. Portable communication device according to any previous claim, comprising only one body.

3. Portable communication device according to any previous claim, wherein each sheet is provided with an exciter (24, 36) arranged to induce vibrations in the respective sheet.

4. Portable communication device according to any previous claim, wherein each sheet is made from an insulating material.

5. Portable communication device according to claim 4, wherein at least one sheet is made from a plastic material.

6. Portable communication device according to claim 4, wherein at least one sheet is made from a ceramic material.

## Patentansprüche

1. Tragbare Kommunikationsvorrichtung (10) mit
zumindest einer ersten Kommunikationseinheit (22) in Form eines ersten Antennenelements, das an einer ersten flachen Platte (26) vorgesehen ist, wobei die flache Platte dazu eingerichtet ist, als ein tonerzeugender Lautsprecher zu wirken, und
zumindest einer zweiten Kommunikationseinheit (18) in Form einer an oder in einer zweiten flachen Platte (46) vorgesehenen Anzeige, wobei die zweite flache Platte auch dazu eingerichtet ist, als ein Lautsprecher zu wirken,
wobei eine Tonöffnung nahe dem ersten Antennenelement vorgesehen ist und die Kommunikationseinheiten (18, 22) sowie die entsprechenden flachen Platten an voneinander abgewandten Seiten der tragbaren Kommunikationsvorrichtung vorgesehen sind.

2. Tragbare Kommunikationsvorrichtung nach einem der vorhergehenden Ansprüche, mit lediglich einem Gehäuse.

3. Tragbare Kommunikationsvorrichtung nach einem der vorhergehenden Ansprüche,
**wobei** jede Platte einen Erreger (24, 36) so angeordnet hat, dass dieser Vibrationen auf die jeweilige Platte überträgt.

4. Tragbare Kommunilcationsvorrichtung nach einem der vorhergehenden Ansprüche,
**wobei** jede Platte aus Isoliermaterial besteht.

5. Tragbare Kommunikationsvorrichtung nach Anspruch 4,
**wobei** zumindest eine Platte aus Kunststoffmaterial hergestellt ist.

6. Tragbare Kommunikationsvorrichtung nach Anspruch 4,
**wobei** zumindest eine Platte aus Keramikmaterial hergestellt ist.

## Revendications

1. Dispositif de communication portable (10), comprenant :
au moins une première unité de communication (22) sous la forme d'un premier élément d'antenne disposé sur une première feuille plate (26), cette première feuille plate étant configurée de façon à fonctionner en haut-parleur générant des sons, et
au moins une deuxième unité de communication (18) sous la forme d'un afficheur et disposée sur ou dans une deuxième feuille plate (46), cette deuxième feuille plate étant également configurée de façon à fonctionner en haut-parleur,
dans lequel une ouverture de son est disposée au voisinage dudit premier élément d'antenne et les unités de communication (18, 22) et les feuilles plates correspondantes (46, 26) sont disposées sur des côtés opposés du dispositif de communication portable.

2. Dispositif de communication portable selon l'une quelconque des revendications précédentes, comprenant un seul corps.

3. Dispositif de communication portable selon l'une quelconque des revendications précédentes, dans lequel chaque feuille est munie d'un élément d'excitation (24, 36) configuré de façon à induire des vibrations dans la feuille respective.

4. Dispositif de communication portable selon l'une quelconque des revendications précédentes, dans lequel chaque feuille est réalisée en un matériau isolant.

5. Dispositif de communication portable selon la revendication 4, dans lequel au moins une feuille est réalisée en une matière plastique.

6. Dispositif de communication portable selon la revendication 4, dans lequel au moins une feuille est réalisée en un matériau céramique.
